# EUROPEAN PATENT SPECIFICATION

(11) **EP 2 323 946 B1**
(45) Date of publication and mention of the grant of the patent: **20.03.2013**
(21) Application number: 09767115.0
(22) Date of filing: 22.06.2009
(51) Int. Cl.: B67D 7/08, G01F 15/00

(54) **TRIGGER RELEASE MECHANISM FOR FLUID METERING DEVICE**
AUSLÖSERFREIGABEMECHANISMUS FÜR FLUIDDOSIERVORRICHTUNG
MÉCANISME À LIBÉRATION DE DÉCLENCHEUR POUR DISPOSITIF DE MESURE DE DÉBIT DE FLUIDE

(30) Priority: 20.06.2008 US 214698
(43) Date of publication of application: 25.05.2011
(73) Proprietor: Graco Minnesota Inc., Minneapolis, MN 55413 (US)
(72) Inventor: BREESER, David, L., Minneapolis MN 55419 (US); BAUCK, Mark, L., Coon Rapids MN 55448 (US); HOLMAN, John, C., Ham Lake MN 55304 (US)
(74) Representative: Bohnenberger, Johannes
(86) International application number: PCT/US2009/003707
(87) International publication number: WO 2009/154802

(56) References cited:
- EP-A1- 0 787 678
- JP-A- 9 169 400
- JP-A- 58 072 011
- JP-T- 2005 537 189
- US-A- 4 883 199
- US-A1- 2006 011 652
- US-B1- 6 443 328

## Description

### BACKGROUND

The present invention is directed toward fluid dispensing meters and more particularly to trigger release mechanisms for such devices. Hand-held devices are often used to dispense measured amounts of fluid from bulk containers. For example, automotive service stations frequently use hand-held meters to dispense small quantities of lubricating oil from large drums into automotive engines. Such hand-held meters and other similar fluid dispensing devices typically include a dispensing valve having a linearly actuated valve stem that rides within a valve cartridge. The valve cartridge is fluidly connected to a source of pressurized fluid within the device, while the valve stem is actuated by an operator to regulate pressurized fluid flow through the valve cartridge. As such, fluid can be continuously dispensed from the device so long as an operator continues to actuate the valve stem, typically through a trigger lever mechanism. In order to monitor fluid consumption, hand-held meters typically include electronics that measure and display the volume of fluid that flows through the device so that an operator is permitted to accurately dispense fluid on a job-by-job basis.

Accountability of fluid consumption is becoming a greater concern, particularly as the cost of materials such as fossil fuels continues to rise. One way of maintaining control over fluid inventories is to prevent unauthorized dispensing of fluid from hand-held meters through use of various dispensing control mechanisms, such as trigger lockouts or solenoid dispensing valves, that are remotely controlled through the meter electronics. With a trigger lockout, an electric actuator is controlled by the meter electronics, which is programmed to move a physical barrier into the path of a trigger lever to inhibit opening of the dispensing valve after a preset amount of fluid is dispensed. Trigger lockouts, however, require the trigger to be released before the physical barrier can be moved into the path of the trigger, thus permitting fluid to flow after the preset amount has been dispensed so long as the trigger remains actuated. With a solenoid dispensing valve, the meter electronics controls a solenoid valve to permit fluid flow, independently of actuation of an electronic trigger mechanism. Thus, the meter electronics can override the electronic trigger mechanism to permit dispensing only when authorized. Such solenoid valves, however, require continuous power consumption to overcome a spring force holding the valve shut, thus placing a large demand on rechargeable batteries used to power the electronics. There is, therefore, a need for an improved dispensing control mechanism, particularly for those used in fluid metering devices.

A metering device according to the preamble of claim 1 is known from US-B-6 443 328.

### SUMMARY

The present invention is directed to a hand-held flow metering device for dispensing a pressurized fluid. The metering device comprises a valve, a flow meter, a trigger lever, a trigger release mechanism and meter electronics. The valve is connected to the pressurized fluid to regulate flow of the pressurized fluid through the device. The flow meter is disposed within the flow of pressurized fluid to measure volumetric flow of the pressurized fluid. The trigger lever is configured to be manually displaced to mechanically open the valve. The trigger release mechanism is connected to the trigger lever and is selectively actuated to mechanically prevent the trigger lever from opening the valve when the trigger lever is displaced. The meter electronics is connected to the flow meter and the trigger release mechanism to actuate the trigger release mechanism based on output of the flow meter.

### BRIEF DESCRIPTION OF THE DRAWINGS

FIG. 1 shows a perspective view of a hand-held fluid dispensing device in which a trigger release mechanism of the present invention is used.
FIG. 2 shows a rearward exploded view of the hand-held fluid dispensing device of FIG. 1 showing a trigger release mechanism of the present invention and a fluid dispensing valve.
FIG. 3 shows a forward exploded view of the hand-held fluid dispensing device of FIG. 1 showing a trigger release mechanism of the present invention and a trigger lever mechanism.
FIG. 4 shows a cross sectional view of the trigger release mechanism of FIGS. 2 and 3.
FIG. 5A shows a cross sectional view of the hand-held fluid dispensing device of FIG. 1 in which a trigger release mechanism is configured to permit a trigger lever mechanism to actuate a fluid dispensing valve.
FIG. 5B shows a cross sectional view of the hand-held fluid dispensing device of FIG. 1 in which in which a trigger lever mechanism is pivoted at the trigger release mechanism to open a fluid dispensing valve.
FIG. 5C shows a cross sectional view of the hand-held fluid dispensing device of FIG. 1 in which a trigger release mechanism is configured to prevent a trigger lever mechanism from actuating a fluid dispensing valve.

### DETAILED DESCRIPTION

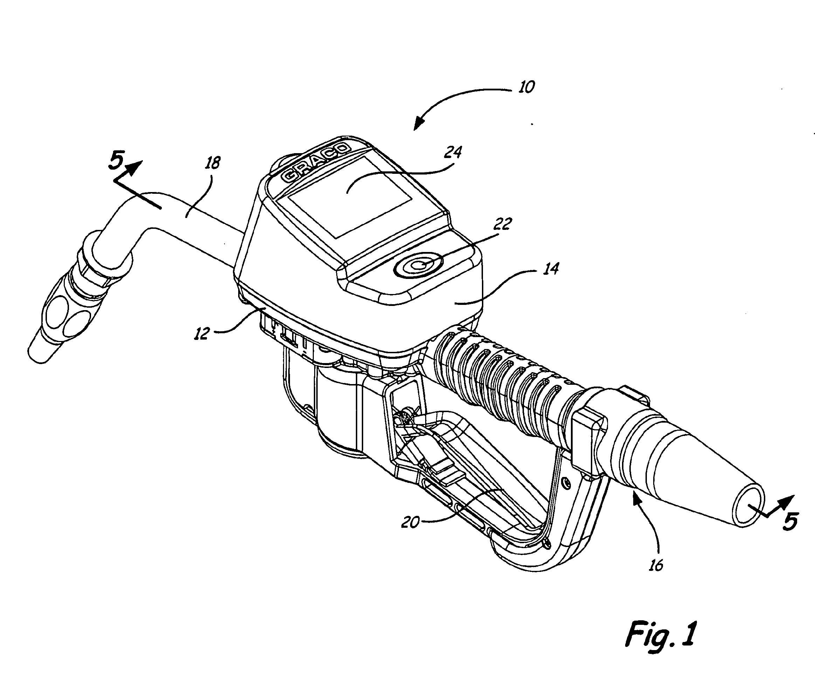

FIG. 1 shows a perspective view of hand-held fluid dispensing device 10 in which a trigger release mechanism of the present invention is used to limit fluid dispensing by device 10. Dispensing device 10 includes platform 12, cover 14, high pressure fluid coupling 16, dispensing tube 18, trigger lever 20, user interface 22 and display 24. Dispensing device 10 permits fluid stored in a large-volume container to be distributed in smaller volumes in a convenient manner. For example, in one embodiment, dispensing device 10 comprises a meter used in lubrication shops to deliver small quantities of lubricating oil from a storage drum to a vehicle engine. Coupling 16 is connected to the large-volume container through a fluid handling hose (not shown), which is pressurized using, for example, an air operated pump. The length of the hose enables device 10 to conveniently reach locations to which it is impractical to move the large-volume container. Dispensing tube 18 is configured to be easily positioned within an opening of a small-volume container, such as an engine crankcase, into which a measured amount of the fluid is to be dispensed. Trigger lever 20 is displaced by an operator to open a valve in platform 12 and dispense fluid from the large-volume container to the small-volume container at dispensing tube 18. User interface 22 and display 24, which are connected to electronics within cover 14, permit the operator to monitor dispensed fluid quantity, process job orders, collect billing and inventory data, communicate with a central control system and perform other similar functions. The trigger release mechanism of the present invention, which is mounted to platform 12 and connected to the electronics under cover 14, selectively prevents displacement of trigger lever 20 from opening the valve to dispense fluid. For example, in one embodiment, an operator uses interface 22 to program the electronics to activate the trigger release mechanism after a preset amount of fluid is dispensed to complete a job order. Furthermore, in other embodiments, the central control system communicates with the electronics to activate the trigger release mechanism to disable trigger lever 20 until a new job order is received.

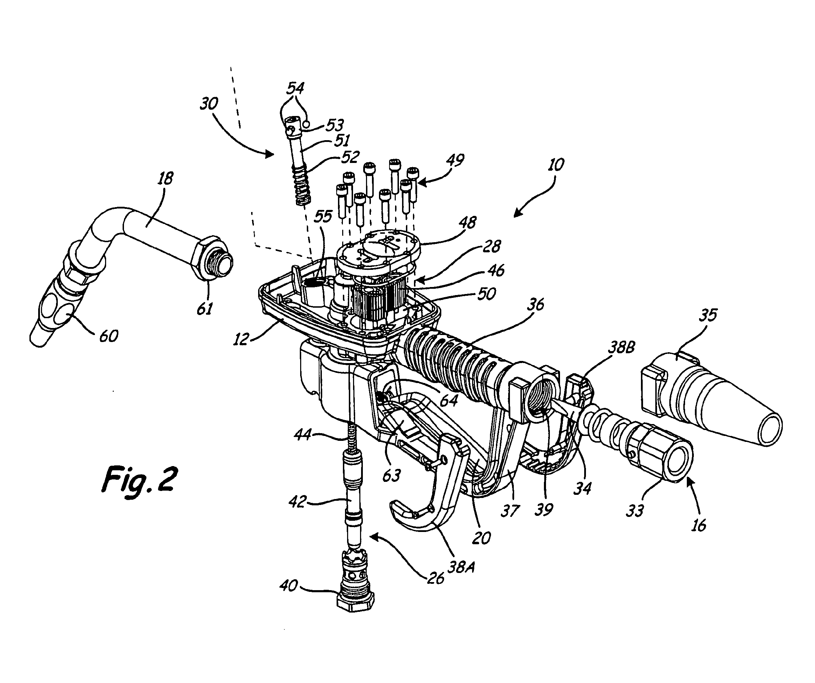

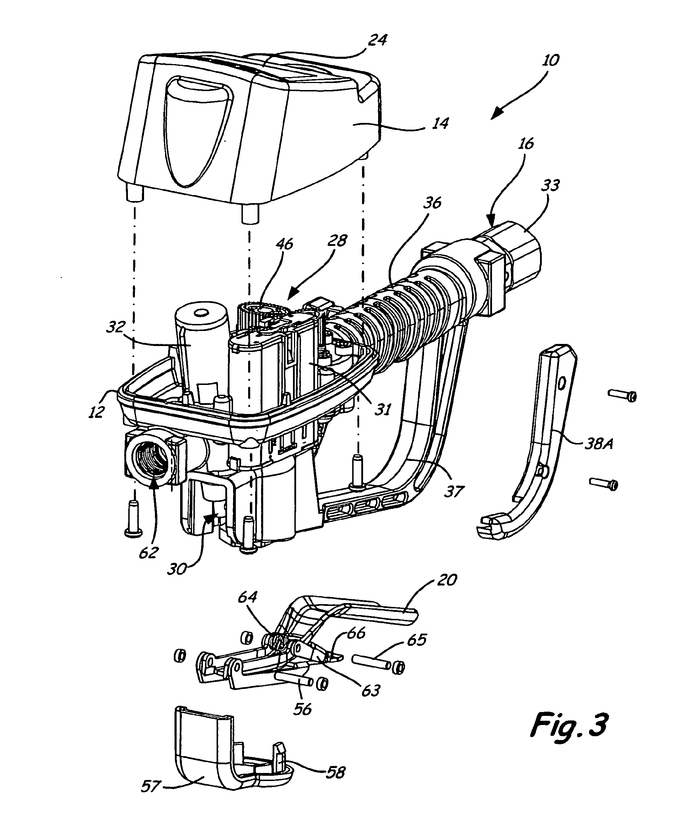

FIGS. 2 and 3 show exploded views of dispensing device 10 of FIG. 1. FIG. 2 shows a rearward view of device 10 in which seal-retaining valve 26, flow meter 28 and trigger release 30 are shown. FIG. 3 shows a forward view of device 10 in which cover 14, flow meter 28, trigger release 30, battery 31 and solenoid 32 are shown. Fluid coupling 16, which includes swivel fastener 33, filter 34 and hose shroud 35, is connected to handle portion 36 of platform 12. Specifically, external threads on fastener 33 join with internal threads within high-pressure fluid passage 39, inside of handle portion 36. Handle portion 36 includes trigger guard 37, which includes pads 38A and 38B, to prevent accidental actuation of trigger 20 and valve 26. Valve 26, which includes valve cartridge 40, valve stem 42 and valve spring 44, is positioned within platform 12 to interrupt flow between passage 39 and tube 18. Flow meter 28 includes gears 46, cover 48 and fasteners 49. Gears 46 are positioned within gear box 50 to engage fluid flowing between coupling 16 and valve 26. Gear box 50 is sealed with cover 48, which is secured with fasteners 49. Trigger release 30, which includes trip rod 51, spring 52, collar 53 and bearings 54, is positioned within bore 55, at the base of which trip rod 51 connects to trigger lever 20. Trigger lever 20 is joined to trip rod 51 with trigger pin 56 to form a pivoting connection, which is enclosed within platform 12 by guard 57. Guard 57 includes frangible tabs 58 that, once installed, must be broken to remove guard 57 from platform 12. From pin 56, trigger lever 20 extends through platform 12 between handle portion 36 and trigger guard 37, engaging valve stem 42 along the way. Dispensing tube 18, which includes nozzle 60 and coupling 61, is connected to low pressure fluid passage 62 within platform 12. Specifically, external threads on coupling 61 join with internal threads within low pressure fluid passage 62.

Trigger lever 20 actuates seal-retaining valve 26 to permit fluid to be dispensed over a range of rates; the further trigger lever 20 is displaced, the more fluid is dispensed at tube 18. Trigger lever 20 can be maintained in an actuated position such that valve 26 remains open using trigger lock 63 and spring 64, which are joined to trigger lever 20 with pin 65. Trigger lock 63 engages ratchet plate 66, which is jointed to trigger lever 20 at pin 56. Valve 26 of device 10 is sized to dispense a high-volumetric output of fluid, such as approximately *∼0,8836 l*/*s* (14 gpm (gallons per minute)) [∼883.6 cc/s (cubic centimeters per second)] or more, which is typically achieved using high fluid pressures. High fluid pressures enable dispensing device 10 to more rapidly dispense fluid to save time, and to more easily dispense highly viscous fluids. In conjunction with meter electronics, flow meter 28 monitors the rate at which the fluid flows through valve 26 to permit precise quantities of fluid to be accurately dispended by actuation of trigger lever 20. Also in conjunction with meter electronics, trigger release 30 prevents over-dispensing by disabling trigger lever 20 after a set amount of fluid has been dispensed, and prevents unauthorized dispensing by maintaining trigger lever 20 disabled until a new job order is received. Thus, fluid dispensing device 10 coordinates the use of metered distribution and a dispensing control mechanism to reduce waste fluid and other sources of inventory shrinkage.

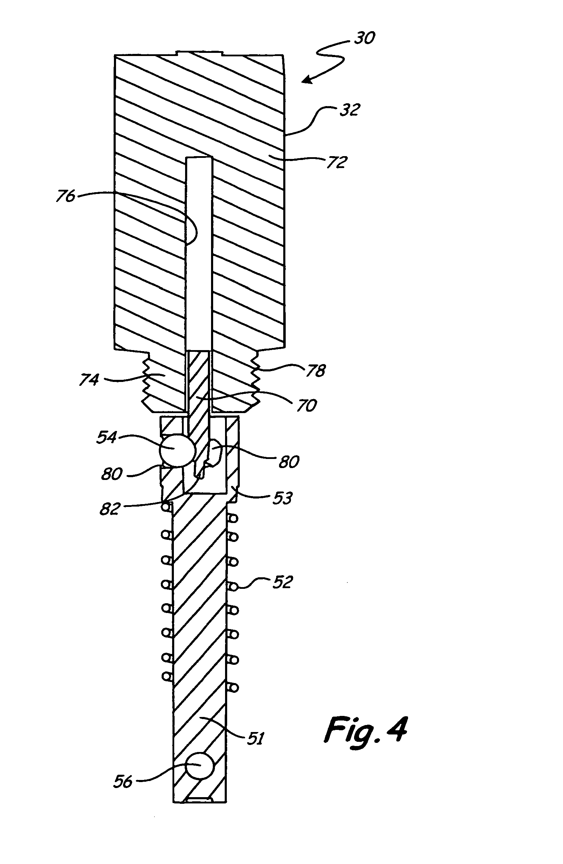

FIG. 4 shows a close up cross sectional view of trigger release mechanism 30 of FIGS. 2 and 3. Trigger release mechanism 30 includes solenoid 32, trip rod 51, release spring 52, collar 53, bearings 54, trigger pin 56 and plunger pin 70. Assembled as shown, solenoid 32 is configured to be mounted to bore 55 (FIG. 2) in platform 12, and trip rod 51 is configured to be inserted through bore 55 and connected to trigger lever 20 at pin 56.

Solenoid 32 includes actuation housing 72, neck 74 and pin channel 76, which extends through neck 74 and into housing 72. Neck 74 includes external threads 78, which are threaded into bore 55 (FIG. 2) within platform 12 to mount actuation housing 72 and plunger pin 70 linearly atop bore 55. Plunger pin 70 is disposed within pin channel 76 and is configured to interact with actuation means within actuation housing 72 to slide within pin channel 76. Actuation housing 72 stores components that are assembled to form an electric actuation mechanism for traversing plunger pin 70 within pin channel 76 between first and second positions. In the first position, plunger pin 70 is extended, as shown in FIG. 4, to emanate from neck 74. In the second position, plunger pin 70 is withdrawn into neck 74 by the actuation means within housing 72. In one embodiment, solenoid 32 comprises a conventional solenoid actuation mechanism in which an electrical current is applied to a coil to electro-magnetically bias plunger pin 70 in the extended position, and a spring force traverses plunger pin 70 to the withdrawn position when the electric current is removed. In another embodiment, solenoid 32 comprises a latching solenoid in which a spring force biases plunger pin 70 in the extended position, a permanent magnet retains plunger pin 70 in the withdrawn position, and an electromagnet is intermittently activated to transition plunger pin 70 between the first and second positions. One such latching solenoid suitable for use in the present invention is described in U.S. Patent No. 6,392,516 by Ward et al. and assigned to TLX Technologies, Waukesha, WI. With a latching solenoid, device 10 does not require constant power to activate solenoid 32 to dispense fluid, as a conventional solenoid requires. Solenoid 32 is connected to meter electronics within device 10 to actuate plunger pin 70 either by operator command or through a central control system.

Trip rod 51 is disposed within bore 55 to interact with plunger pin 70. Specifically, collar 53 is connected to a first end of trip rod 51 to releasably engage plunger pin 70 when in the extended position. A second end of trip rod 51 is connected to trigger lever 20 with trigger pin 56. Release spring 52 is positioned around trip rod 51 and is biased between collar 53 and platform 12 to push trip rod 51 into engagement with neck 74 of solenoid 32. Collar 53 includes a plurality of bores 80 into which a plurality of ball bearings 54 are disposed. In one embodiment, collar 53 includes three bearings 54 and three bearing bores 80. Bores 80 are disposed approximately equidistant around the perimeter of collar 53, i.e. about 120 degrees apart. Bores 80 comprise holes that extend through collar 53 to limit movement of bearings 54 to only along the centerlines of bores 80, which produces radial movement from the centerline of trip rod 51. To facilitate assembly with platform 12, bores 80 are tapered, rounded or otherwise reduced in diameter nearer the interior of collar 53 to prevent bearings 54 from falling into collar 53. For example, in one embodiment, bores 80 are produced with a ball-end milling process to produce the tapered shape. In any embodiment, the diameter of bearings 54 is greater than the depth of bores 80 such that bearings 54 must at least partially extend beyond the interior or exterior surface of collar 53. Bearings 54 are permitted to partially extend from bores 80 to partially enter collar 53 and engage tip 82 of plunger pin 70. Bearings 54 are also permitted to extend from bores 80 outside of collar 53 to engage bore 55. Plunger pin 70 is ramped down toward tip 82 to facilitate insertion and removal of plunger pin 70 from between bearings 54.

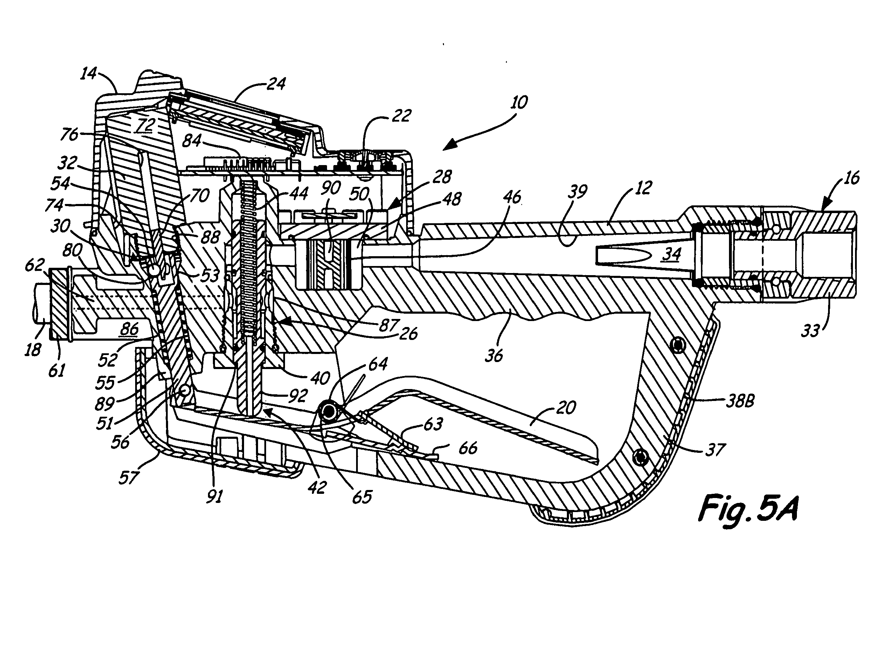

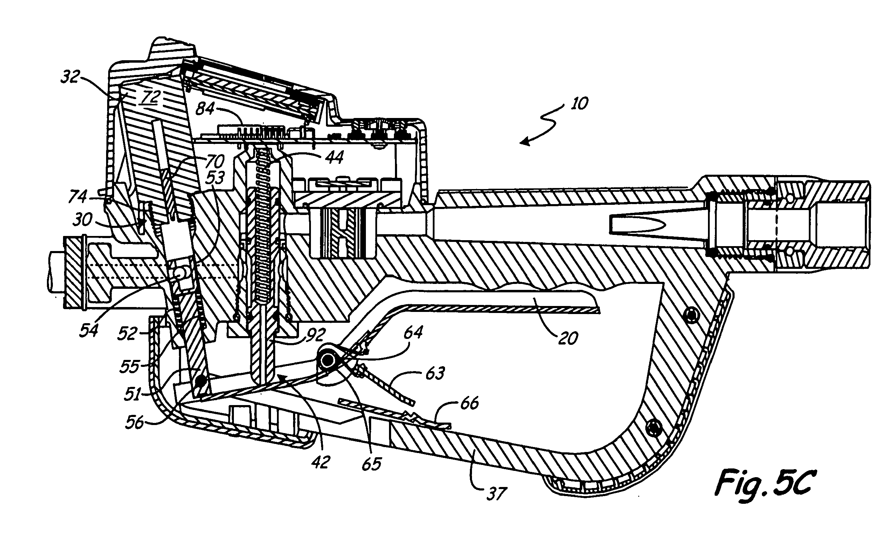

With plunger pin 70 in the first or extended position, tip 82 of plunger pin 70 wedges bearings 54 against walls of bore 55 to suspend trip rod 51 within bore 55, as will be explained in greater detail with respect to FIG. 5A. With plunger pin 70 in the second or withdrawn position, bearings 54 are freely floating within bores 80 and trip rod 51 is free to float within bore 55, as will be explained in greater detail with respect to FIG. 5C.

FIG. 5A shows a cross section of fluid dispensing device 10 taken at section 5 - 5 of FIG. 1, in which trigger release mechanism 30 is configured to permit trigger lever 20 to actuate a fluid dispensing valve. Dispensing device 10 includes platform 12, cover 14, fluid coupling 16, dispensing tube 18, trigger lever 20, user interface 22, display 24, seal-retaining valve 26, flow meter 28, trigger release 30 and electronics 84. Valve 26 includes valve cartridge 40, valve stem 42 and valve spring 44. Flow meter 28 includes gears 46, cover 48 and fasteners 49. Trigger release mechanism 30 includes solenoid 32, trip rod 51, release spring 52, collar 53, bearings 54, trigger pin 56 and plunger pin 70.

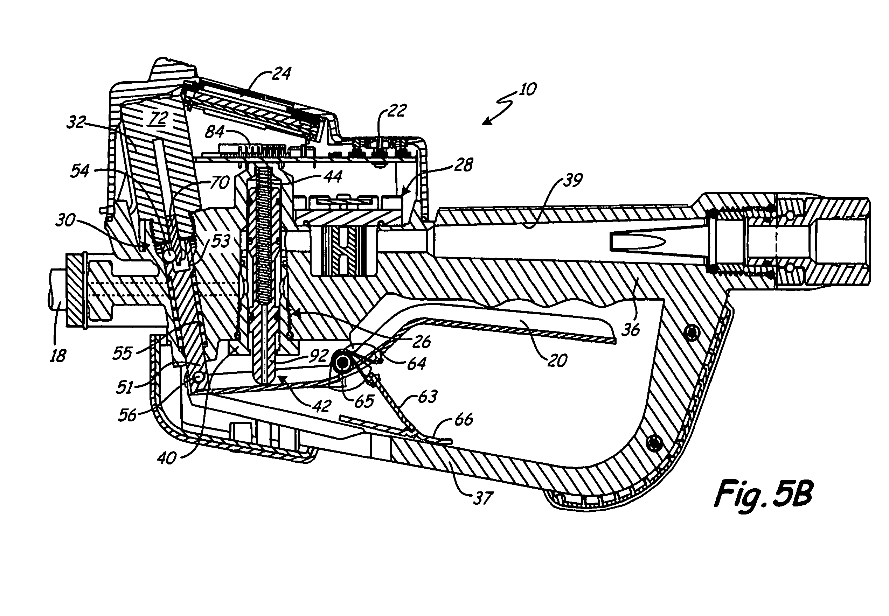

Platform 12 includes handle portion 36, which includes high-pressure fluid passage 39, and dispensing portion 86, which includes low-pressure fluid passage 62 (which is shown in hidden lines in FIG. 5 and visible behind dispensing portion 86 in FIG. 3). High-pressure fluid passage 39 is in fluid communication with low-pressure fluid passage 62 through valve 26 to conduct fluid from coupling 16 to dispensing tube 18. High-pressure fluid passage 39 extends centrally through platform 12 within handle portion 36 and intersects valve 26. Low-pressure fluid passage 62 extends tangentially from valve 26, past bore 55 to dispensing tube 18, parallel to high-pressure fluid passage 39. Fluid coupling 16 is connected to an upstream end of fluid passage 39 through a threaded engagement. Gears 46 of flow meter 28 are disposed within gear box 50 positioned within a middle portion of passage 39. Gear box 50 is covered and sealed by lid 48. Seal-retaining valve 26 and trigger release 30 are disposed within bores 87 and 55, respectively, which extend into platform 12. Valve bore 87 extends approximately transversely into platform 12 to approximately perpendicularly intersect high-pressure fluid passage 39. An upper portion of bore 87 connects to the downstream end of passage 39, and a lower portion of bore 87 connects to the upstream end of passage 62. Release bore 55 extends into platform 12 approximately five degrees offset from vertical with respect to fluid passage 39. Release bore 55 does not intersect high-pressure fluid passage 39 or low-pressure fluid passage 62. An upper portion of release bore 55 comprises a threaded counterbore to form seat 88 for receiving neck 74 of solenoid 32. Middle portion of release bore 55 is sized to slidably receive release spring 52 and collar 53. Lower portion 89 of release bore 55 is sized to slidably receive only trip rod 51 such that spring 52 is positioned between platform 12 and collar 53. Coupling 61 is connected to a downstream end of passage 62 to guide fluid from device 10 through dispensing tube 18.

Meter 28 is positioned within passage 39 between fluid coupling 16 and dispensing valve 26. Meter 28 generally comprises a set of positive displacement gears 46 that are rotated by the flow of pressurized fluid from coupling 16 within gear box 50. Each gear 46 includes a sensor or magnet 90, the position of which is detectible by electronics positioned within lid 48 to determine the rotational speed of gear 46. Lid 48 is connected to electronics 84 such that the rotational speed of gears 46 can be converted to a volumetric flow rate of fluid passing through high-pressure fluid passage 39. Further explanation of meter 28 is found in the aforementioned co-pending application entitled "INVOLUTE GEAR TEETH FOR FLUID METERING DEVICE".

Valve 26 is positioned within bore 87 to regulate flow between passage 39 and passage 62. With valve spring 44 inserted into valve stem 42 and valve stem 42 inserted into valve cartridge 40, external threads on valve cartridge 40 are threaded into bore 87 within platform 12. Inserted as such, valve spring 44 engages a dead-end of bore 87 within platform 12 and is compressed to bias valve stem 42 toward valve cartridge 40. Valve cartridge 40 includes lip 91 that engages a lip on valve stem 42 to prevent valve stem 42 from passing through valve cartridge 40. Actuation portion 92 of valve stem 42 extends from bore 87 through valve cartridge 40 to engage trigger lever 20. Further explanation of dispensing valve 26 is found in the aforementioned co-pending application entitled "SEAL-RETAINING VALVE FOR FLUID METERING DEVICE".

Trigger release 30 includes solenoid 32, trip rod 51, spring 52, collar 53, bearings 54 and plunger pin 70, and is configured to disable trigger lever 20 after a threshold amount of fluid has passed through meter 28. Solenoid 32 is mounted atop platform 12 such that plunger pin 70 is extendable into release bore 55 to engage trip rod 51. Neck 74 of solenoid housing 72 is threaded into release bore 55 so that solenoid housing 72 extends up from platform 12 and plunger bore 76 is aligned with release bore 55. Plunger pin 70 is extended from plunger bore 76 to releasably engage collar 53 of trip rod 51. Trip rod 51 extends through bore 55 to join with plunger pin 70 at a first end and trigger lever 20 at a second end. Specifically, bearings 54 within bores 80 of collar 53 engage plunger pin 70 at the first end, and pin 56 extends through trip rod 51 and trigger lever 20 at the second end. Trigger lever 20 extends generally laterally from pin 56 to engage valve 26. Trigger lock 63 is connected to trigger lever 20 at pin 65, and ratchet plate 65 is connected to trigger lever 20 at pin 56. Trigger release mechanism 30 selectively connects trigger lever 20 to platform 12 to provide a fixed pivot point for actuation of trigger lever 20.

Solenoid 32 is connected to electronics 84, which includes software, circuitry and other components that are programmable to control device 12. Additionally, in other embodiments, electronics 84 includes other components for communicating over a wired network, a wireless network or radio network such that device 12 can send and receive information, such as work orders and fluid consumption quantities, to and from a computer system. Device 10 also includes battery 31 (FIG. 3) for operating interface 22, display 24, solenoid 32, electronics 84 and any other electrical component of device 10. Solenoid 32 comprises a two way electromagnetic device that is activated by electronics 84 to alternate the position of plunger pin 70 between being withdrawn into solenoid 32 and being extended into bore 55.

Solenoid 32 is actuated to permit manual dispensing of fluid with trigger lever 20 after electronics 84 receive authorization over the communications network for a new job order. In the embodiment using a latching solenoid, a momentary positive voltage is applied across an electro-magnetic coil to disengage plunger pin 70 from a permanent magnet within housing 72 that retains plunger pin 70 in the withdrawn position. The electro-magnetic force of the coil overcomes the force of the permanent magnet to permit a spring force to bias plunger pin 70 to the extended position, as shown in FIG. 5A. As such, plunger pin 70 engages bearings 54 and pushes bearings 54 into collar 53 such that movement of bearings 54 toward each other within collar 53 is inhibited. Bearings 54 partially extend from bores 80 to engage the wall of bore 55. The spring force of solenoid 32 is large enough to part bearings 54 and wedge bearings 54 between plunger pin 70 and bore 55. Trip rod 51 is thus prevented from moving downward by bearings 54 and upward by solenoid 32. Specifically, trip rod 51 is suspended from bearings 54 such that the second end of trip rod 51 at pin 56 is stationary with respect to its axial position within bore 55. Thus, trigger lever 20 is permitted to pivot about pin 56 and can be actuated to open valve 26.

FIG. 5B shows a cross section of fluid dispensing device 10 taken at section 5-5 of FIG. 1, in which trigger lever 20 is pivoted about trip rod 51 to displace valve stem 42 of dispensing valve 26. Specifically, trigger lever 20 is brought toward handle portion 36 by an operator to push actuation portion 92 of valve stem 42 into valve cartridge 40 to allow fluid to flow into low-pressure fluid passage 62 from high-pressure fluid passage 39. The fixed position of pin 56 and the mechanical leverage gained by trigger lever 20 permits the resistance of valve spring 44 to be overcome. Plunger pin 70 of trigger release mechanism 30 is retained in the extended position through a spring force or electro-magnetic force generated by the solenoid mechanism within solenoid housing 72, depending on the embodiment. Plunger pin 70 maintains bearings 54 pinned against bore 55 to prevent downward movement of trip rod 51.

Trigger lock 63 comprises a jack plate that is employed in conjunction with ratchet plate 66 to prop trigger lever 20 in a position to maintain valve 26 opened, which is particularly convenient for dispensing large quantities of fluid without the need for supervision of device 10. As lever 20 is rotated up, ratchet plate 66 pivots about pin 56 and slides along trigger guard 37, while trigger lock 63 is pulled up from trigger guard 37 at pin 65 and rotated downward to engage ratchet plate 66. Ratchet plate 66 includes corrugations or some other such ledges against which trigger lock 63 is propped up against. Lock spring 64 biases trigger lock 63 toward lever 20, but is prevented from doing so by engagement with ratchet plate 66. Lever 20 is propped upward to continuously retain valve 26 open through the leverage gained by fixing trigger pin 56 above actuation portion 92 of valve stem 42, thus permitting fluid to continuously flow from tube 18.

Trigger lock 63 can be manually disengaged and trigger lever 20 manually lowered to close valve 26, as shown in FIG. 5A, after the desired amount of fluid is dispensed from device 10. For example, using meter 28 and electronics 84, display 24 outputs the total dispensed fluid volume of device 10 for the particular job order. After the desired amount of fluid is dispensed, the operator simply disengages trigger lock 63 from ratchet plate 66 and disengages lever 20 from valve stem 42 by rotating lever 20 about trigger pin 56. The force of valve spring 44 pushes actuation portion 92 of valve stem 42 out of valve cartridge 40 to close valve 26. Trigger release mechanism 30 of the present invention, however, enables electronics 84 to activate solenoid 32 to automatically close valve 26, independent of the actuated position of trigger lever 20. For example, using interface 22 and display 24, an operator can program device 10 to dispense a preset volume of fluid. After a set amount of fluid has passed through valve 26, as measured by meter 28, trigger release 30 is actuated by electronics 84 to withdraw plunger pin 70 from collar 53.

FIG. 5C shows a cross sectional view of fluid dispensing device 10 taken at section 5 - 5 of FIG. 1, in which trigger release mechanism 30 is configured to prevent trigger lever 20 from actuating fluid dispensing valve 26. FIG. 5C shows device 10 in the moments immediately after electronics 84 determines that device 10 has dispensed the preset amount of fluid, and solenoid 32 is activated to withdraw plunger pin 70 from collar 53. As such, valve stem 42 and trip rod 51 are forced downward by valve spring 44 and trigger lever 20 is transitioning from the actuated to the un-actuated position. In the embodiment using a latching solenoid, a momentary negative voltage is applied across an electro-magnetic coil to overcome a spring force biasing plunger pin 70 in the extended position. The electro-magnetic force of the coil pushes plunger pin 70 to engage a permanent magnet within housing 72 and retain plunger pin 70 in the withdrawn position, as is shown in FIG. 5C. The ramped surface of tip 82 (FIG. 4) of plunger pin 70 facilitates withdrawal of plunger pin 70 from between bearings 54 by producing a component of upward force from bearings 54 along plunger pin 70 to reduce the force solenoid 32 is required to generate. When plunger pin 70 is withdrawn, bearings 54 are permitted to retreat within collar 53 to touch each other. Thus, bearings 54 do not extend beyond the outer edge of bores 80 and are no longer pinned against bore 55. Trip rod 51 is therefore permitted to freely slide within bore 55, un-fixing the pivot point for trigger lever 20 at trigger pin 56. The force of valve spring 44 pushes trigger pin 56 and trigger lever 20 down toward trigger guard 37, pulling trip rod 51 along. Thus, trigger pin 56 is positioned below actuation portion 92, eliminating the mechanical advantage of trigger lever 20 with respect to actuation portion 92 of valve stem 42. Release spring 52 is positioned between collar 53 and platform 12 to push trip rod 51 back into engagement with neck 74 of solenoid 32 after trigger lever 20 is released. The spring force of valve spring 44 is relatively stronger than the spring force of release spring 52. Even though trigger lever 20 is partially actuated, valve 26 is closed. Any further actuation of trigger lever 20 will only produce rotation of trigger lever 20 about dispensing portion 92, rather than cause valve spring 44 to compress.

Trigger release mechanism 30 operates regardless of the position of trigger lever 20. Trip rod 51 uncouples the forward end of lever 20 such that manipulation of the aft end of lever 20 is prevented from having the ability to actuate valve stem 42. Thus, if an operator were retaining trigger lever 20 in the actuated position, withdrawal of plunger pin 70 from collar 53 would still allow valve stem 42 to push trip rod 51 away from solenoid 32. If trigger lever were released, upward force from release spring 52 would return trip rod 51 to solenoid 32. Likewise, if trigger lock 63 was configured to retain trigger lever 20 in the actuated position, such as in FIG. 5B, withdrawal of plunger pin 70 from collar 53 would still allow valve stem 42 to push trip rod 51 away from solenoid 32 and return trigger lever 20 to the un-actuated position. The downward force of valve stem 42 after plunger pin 70 is withdrawn produces a momentary downward movement of trip rod 51, which produces rotational movement of trigger lever 20 about actuation portion 92 of valve stem 26 due to the angular orientation of release bore 55. The momentary angular rotation of trigger lever 20 produces a slight relative forward movement of trigger lock 63 with respect to ratchet plate 66 due to the different positions of pins 56 and 65 about trigger lever 20, thus causing trigger lock 63 to disengage from the corrugations of ratchet plate 66. Lock spring 64 pulls trigger lock 63 up toward trigger lever 20, enabling trigger lever 20 to fall toward trigger guard 37, and release spring 52 simultaneously pulls trip rod 51 toward solenoid 32, as shown in FIG. 5A. Under any conditions, collar 53 is not able to reattach to plunger pin 70 while plunger pin 70 is withdrawn into housing 72. The ability of trigger lever 20 to actuate valve 26 is not regained until plunger pin 70 is again extended from neck 74.

Dispensing from device 10 is resumed depending on the programming of electronics 84. In one embodiment of the invention, electronics 84 is programmed to return plunger pin 70 to the extended position after a pre-programmed amount of time so that a subsequent job order can be manually processed by device 10. For example, an operator employs interface 22 to set device 10 to dispense a preset amount of fluid to fulfill a job order. In another embodiment, electronics 84 is programmed to retain plunger pin 70 within housing 72 until a subsequent job order is received, either manually from an operator or automatically from a central control system over the communications network. For example, a new job order is automatically processed by electronics 84 after receiving instructions form a central control system, such as a PC workstation connected to a network. This embodiment provides a security feature to device 10 that prevents unauthorized dispensing from device 10, as any further manipulation or retention of the position of trigger lever 20 by an operator will not open valve 26 without authorization form the central control system. Furthermore, the linkage between trip rod 51 and trigger lever 20 at pin 56 is concealed and protected within platform 12 behind guard 57. Guard 57 can only be removed from platform 12 by force so as to fracture tabs 58 (FIG. 2). Thus, tampering of trip rod 51 leaves visible indications that provide a deterrent effect.

In any event, when a new job order is received by electronics 84, electronics 84 applies an appropriate positive voltage across solenoid 32 to extend plunger pin 70 to engage collar 53 and bearings 54. Subsequently, trigger 20 can be actuated to begin the dispensing process, and trigger lock 63 can be employed to permit device 10 to continue to dispense the fluid until the preset volume is reached. After the threshold volume of fluid is dispensed, electronics 84 applies a negative voltage across solenoid 32 to withdraw plunger pin 70 from collar 53, causing trip rod 51 to slide downward within bore 55, trigger lock 63 to be disengaged, trigger lever 20 to be returned to the un-actuated position, and valve 26 to close, stopping the flow of fluid from device 10. Subsequent dispensing of fluid from device 10 by manipulation of trigger lever 20 is regulated by trigger release mechanism 30, which provides added security to fluid inventories. Trigger release mechanism 30 can thus be combined with other inventory control systems, such as fluid tank level monitors, to gain greater control over fluid inventories and to assist in reducing inventory shrinkage. With the use of latching solenoids, the present invention also provides enhanced power saving capabilities. Solenoid 32 only requires intermittent activation to switch the position of plunger pin 70, avoiding the need for continuous power to dispense fluid from device 10.

## Claims

1. A hand-held flow metering device (10) for dispensing a pressurized fluid, the device comprising:
a valve (26) connected to the pressurized fluid for regulating flow of the pressurized fluid through the device;
a flow meter (28) disposed within the flow of pressurized fluid to measure volumetric flow of the pressurized fluid;
a trigger lever (20) configured to be manually displaced to mechanically open the valve;
a trigger release mechanism (30); and
meter electronics (84) connected to the flow meter and the trigger release mechanism to actuate the trigger release mechanism based on output of the flow meter;
**characterised in that** the trigger release mechanism (30) is connected to the trigger lever and adapted to be selectively actuated to mechanically prevent the trigger lever from opening the valve when the trigger lever is displaced.

2. The hand-held flow metering device of claim 1 wherein the trigger release mechanism comprises:
a solenoid (32);
a plunger pin (70) linearly actuated by the solenoid to move from a first position to a second position; and
a trip rod (51) having a first end releasably connected to the plunger pin in the first position, and a second end pivotably connected to the trigger lever.

3. The hand-held flow metering device of claim 2 wherein the first end of the trip rod comprises:
a collar (53);
a plurality of bores (80) extending through the collar; and
a plurality of ball bearings (54) disposed within the plurality of bores;
wherein the plunger pin pushes the plurality of ball bearings into the plurality of bores to inhibit linear displacement of the trip rod when in the first position.

4. The hand-held flow metering device of claim 3 wherein the trip rod includes a release spring (52) to bias the collar toward the solenoid.

5. The hand-held flow metering device of claim 4 and further comprising a trigger lock connected to the trigger, the trigger lock comprising:
a jack plate (63) pivotably extending from the trigger lever from a first pin (65);
a lock spring (64) positioned around the first pin to bias the jack plate toward the trigger lever; and
a ratchet plate (66) extending from the trigger lever from a second pin (56) to engage the jack plate.

6. The hand-held flow metering device of claim 5 wherein the trip rod is oriented to produce displacement of the trigger lever along a vector having components parallel with and perpendicular to a line of actuation of the dispensing valve.

7. The hand-held flow metering device of claim 3 wherein the plunger pin includes a ramped surface for engaging the plurality of ball bearings.

8. The hand-held flow metering device of claim 3 wherein the plurality of bores in the collar are constricted to prevent the plurality of ball bearings from falling into the collar.

9. The hand-held flow metering device of claim 3 wherein the solenoid comprises a latching solenoid.

10. The hand-held flow metering device of claim 3 wherein the meter electronics actuate the plunger pin from the first position to the second position after the flow meter measures a preset amount of volumetric flow of the pressurized fluid.

11. The hand-held flow metering device of claim 3 wherein the meter electronics actuate the plunger pin from the second position to the first position after receiving authorization from a communications network.

12. The hand-held flow metering device (10) for dispensing a pressurized fluid of claim 1, the device comprising:
a platform (12) including:
an internal fluid passage (39) extending through the platform to receive the pressurized fluid;
a blind end valve bore (87) extending into the platform to intersect fluid passage; and
a release bore (55) extending through the platform adjacent the blind end valve bore;
wherein the valve (26) is disposed in the blind end valve bore to regulate flow of the pressurized fluid through the fluid passage, the valve having a linearly actuated valve stem (42) extending from the blind end valve bore;
wherein the release mechanism (30) is connected to the release bore, the release mechanism comprising:
a solenoid (32) connected to the platform atop the release bore;
a plunger pin (70) emanating from the solenoid to extend into the release bore, the solenoid configured to linearly actuate the plunger pin between a first position and a second position; and
a trip rod (51) disposed within the release bore and having a first end releasably connectable to the plunger pin, and a second end; and
wherein the trigger lever (20) is pivotably connected to the second end of the trip rod and extends to engage the valve stem;
wherein, in the first position, the plunger pin is coupled to the first end of the trip rod such that the second end of the trip rod provides a fixed pivot point to enable actuation of the trigger lever to actuate the valve; and
wherein, in the second position, the plunger pin is uncoupled from the trip rod such that the trip rod is slidable within the release bore by actuation of the trigger lever.

13. The hand-held flow metering device of claim 12 wherein the trip rod further comprises:
a collar (53) positioned at a first end of the trip rod;
a plurality of tapered bores (80) extending through the collar;
a plurality of ball bearings (54) disposed within the plurality of tapered bores, wherein the plunger pin extends to the first position to wedge the plurality of ball bearings between plunger pin and the release bore to inhibit linear displacement of the collar;
a release spring (52) surrounding the trip rod within the release bore to bias the collar toward the solenoid;
a valve spring (44) disposed within the valve bore between the valve stem and the platform to bias the valve to a closed position; and
a trigger lock comprising:
a jack plate (63) pivotably extending from the trigger lever from a first pin (65);
a lock spring (64) positioned around the first pin to bias the jack plate toward the trigger lever; and
a ratchet plate (66) extending from the trigger lever from a second pin (56) to engage the jack plate.

14. The hand-held flow metering device of claim 13 wherein a line of actuation of the plunger pin is disposed to intersect a line of actuation of the valve stem at an acute angle such that movement of the trip rod in the release bore produces rotation of the trigger lever about the valve stem.

15. The hand-held flow metering device of claim 1 and further comprising a frangible cover plate connected to the platform to restrict access to the second end of the trip rod.

## Patentansprüche

1. Durchflussmesshandgerät (10) zur Abgabe eines Druckfluids, wobei das Gerät umfasst:
ein Ventil (26), das mit dem Druckfluid verbunden ist, um einen Durchfluss des Druckfluids durch das Gerät zu regeln;
eine Strömungsmesseinrichtung (28), die in der Druckfluidströmung angeordnet ist, um einen Volumenstrom des Druckfluids zu messen;
einen Auslösehebel (20), der dazu ausgelegt ist, manuell verschoben zu werden, um das Ventil mechanisch zu öffnen;
einen Freisetzungsauslösemechanismus (30), und
eine an die Strömungsmesseinrichtung und den Freisetzungsauslösemechanismus angeschlossene Messelektronik (84) zum Betätigen des Freisetzungsauslösemechanismus auf Grundlage einer Ausgabe der Strömungsmesseinrichtung;
**dadurch gekennzeichnet, dass** der Freisetzungsauslösemechanismus (30) an den Auslösehebel angeschlossen und dazu angepasst ist, selektiv betätigt zu werden, um auf mechanische Weise zu verhindern, dass der Auslösehebel das Ventil öffnet, wenn der Auslösehebel verschoben wird.

2. Durchflussmesshandgerät nach Anspruch 1, wobei der Freisetzungsauslösemechanismus umfasst:
einen Elektromagneten (32);
einen Raststift (70), der durch den Elektromagneten linear betätigt wird, um sich von einer ersten Position zu einer zweiten Position zu bewegen; und einen Auslösestab (51) mit einem ersten Ende, das lösbar mit dem Raststift in der ersten Position verbunden ist, und einem zweiten Ende, das schwenkbar mit dem Auslösehebel verbunden ist.

3. Durchflussmesshandgerät nach Anspruch 2, wobei das erste Ende des Auslösestabs umfasst:
einen Ansatz (53);
mehrere Bohrungen (80), die durch den Ansatz verlaufen; und
mehrere Kugellager (54), die in den mehreren Bohrungen angeordnet sind;
wobei der Raststift die mehreren Kugellager in die mehreren Bohrungen drückt, um eine lineare Verschiebung des Auslösestabs zu verhindern, wenn er sich in der ersten Position befindet.

4. Durchflussmesshandgerät nach Anspruch 3, wobei der Auslösestab eine Freigabefeder (52) zum Vorspannen des Ansatzes gegen den Elektromagnet umfasst.

5. Durchflussmesshandgerät nach Anspruch 4 und darüber hinaus eine mit dem Auslösehebel verbundene Auslösesperre umfassend, wobei die Auslösesperre umfasst:
einen Hubteller (63), der sich schwenkbeweglich von dem Auslösehebel von einem ersten Stift (65) erstreckt;
eine Arretierungsfeder (64), die um den ersten Stift herum angeordnet ist, um den Hubteller gegen den Auslösehebel vorzuspannen; und
eine Sperrklinkenplatte (66), die sich von dem Auslösehebel von einem zweiten Stift (56) erstreckt, um den Hubteller in Eingriff zu nehmen.

6. Durchflussmesshandgerät nach Anspruch 5, wobei der Auslösestab so ausgerichtet ist, dass er eine Verschiebung des Auslösehebels entlang eines Vektors mit Komponenten hervorruft, die parallel und senkrecht zu einer Betätigungslinie des Abgabeventils sind.

7. Durchflussmesshandgerät nach Anspruch 3, wobei der Raststift eine schräge Fläche umfasst, um die mehreren Kugellager in Eingriff zu nehmen.

8. Durchflussmesshandgerät nach Anspruch 3, wobei die im Ansatz befindlichen mehreren Bohrungen verengt sind, um zu verhindern, dass die mehreren Kugellager in den Ansatz fallen.

9. Durchflussmesshandgerät nach Anspruch 3, wobei der Elektromagnet einen Haltemagneten umfasst.

10. Durchflussmesshandgerät nach Anspruch 3, wobei die Messelektronik den Raststift von der ersten Position zur zweiten Position in Bewegung setzt, nachdem die Strömungsmesseinrichtung einen voreingestellten Volumenstrombetrag des Druckfluids gemessen hat.

11. Durchflussmesshandgerät nach Anspruch 3, wobei die Messelektronik nach Empfang einer Autorisierung von einem Kommunikationsnetz den Raststift von der ersten Position zur zweiten Position in Bewegung setzt.

12. Durchflussmesshandgerät (10) nach Anspruch 1 zur Abgabe eines Druckfluids, wobei das Gerät umfasst:
eine Auflageplatte (12), die beinhaltet:
einen inneren Fluiddurchgang (39), der sich durch die Auflageplatte erstreckt, um das Druckfluid aufzunehmen;
eine Ventilsackbohrung (87), die sich den Fluiddurchgang kreuzend in die Auflageplatte erstreckt; und
eine Freisetzungsbohrung (55), die sich angrenzend an die Ventilsackbohrung durch die Auflageplatte erstreckt;
wobei das Ventil (26) in der Ventilsackbohrung angeordnet ist, um einen Durchfluss des Druckfluids durch den Fluiddurchgang zu regeln, wobei das Ventil einen linear betätigten Ventilschaft (42) hat, der sich von der Ventilsackbohrung erstreckt;
wobei der Freisetzungsmechanismus (30) mit der Freisetzungsbohrung verbunden ist, wobei der Freisetzungsmechanismus umfasst:
einen Elektromagneten (32), der oberhalb der Freisetzungsbohrung mit der Auflageplatte verbunden ist;
einen Raststift (70), der aus dem Elektromagneten sich in die Freisetzungsbohrung erstreckend hervortritt, wobei der Elektromagnet dazu ausgelegt ist, den Raststift zwischen einer ersten Position und einer zweiten Position linear in Bewegung zu setzen; und
einen Auslösestab (51), der in der Freisetzungsbohrung angeordnet ist und ein erstes Ende, das lösbar mit dem Raststift verbunden werden kann, und ein zweites Ende hat; und
wobei der Auslösehebel (20) schwenkbar mit dem zweiten Ende des Auslösestabs verbunden ist und ausfährt, um den Ventilschaft in Eingriff zu nehmen;
wobei der Raststift in der ersten Position mit dem ersten Ende des Auslösestabs verbunden ist, so dass das zweite Ende des Auslösestabs einen feststehenden Drehpunkt bereitstellt, um eine Betätigung des Auslösehebels zum Betätigen des Ventils zu ermöglichen; und
wobei der Raststift in der zweiten Position vom Auslösestab losgelöst ist, so dass der Auslösestab durch eine Betätigung des Auslösehebels in der Freisetzungsbohrung gleiten kann.

13. Durchflussmesshandgerät nach Anspruch 12, wobei der Auslösestab darüber hinaus umfasst:
einen Ansatz (53), der am ersten Ende des Auslösestabs angeordnet ist;
eine Vielzahl sich verjüngender Bohrungen (80), die sich durch den Ansatz erstrecken;
eine Vielzahl von Kugellagern (54), die in der Vielzahl der sich verjüngenden Bohrungen angeordnet ist, wobei der Raststift zur ersten Position ausfährt, um die Vielzahl der Kugellager zwischen dem Raststift und der Freisetzungsbohrung festzuklemmen, um eine lineare Verschiebung des Ansatzes zu verhindern;
eine Freigabefeder (52), die den Auslösestab in der Freisetzungsbohrung umgibt, um den Ansatz gegen den Elektromagneten vorzuspannen;
eine Ventilfeder (44), die zwischen dem Ventilschaft und der Auflageplatte in der Ventilbohrung angeordnet ist, um das Ventil in eine geschlossene Position vorzuspannen; und
eine Auslösesperre, die umfasst:
einen Hubteller (63), der sich schwenkbeweglich von dem Auslösehebel von einem ersten Stift (65) erstreckt;
eine Arretierungsfeder (64), die um den ersten Stift herum angeordnet ist, um den Hubteller gegen den Auslösehebel vorzuspannen; und
eine Sperrklinkenplatte (66), die sich von dem Auslösehebel von einem zweiten Stift (56) erstreckt, um den Hubteller in Eingriff zu nehmen.

14. Durchflussmesshandgerät nach Anspruch 13, wobei eine Betätigungslinie des Raststifts eine Betätigungslinie des Ventilschafts in einem spitzen Winkel kreuzend angeordnet ist, so dass eine Bewegung des Auslösestabs in der Freisetzungsbohrung eine Drehung des Auslösehebels um den Ventilschaft hervorruft.

15. Durchflussmesshandgerät nach Anspruch 1 und darüber hinaus eine zerbrechliche Abdeckplatte umfassend, die mit der Auflageplatte verbunden ist, um einen Zugang zum zweiten Ende des Auslösestabs einzuschränken.

## Revendications

1. Dispositif portatif (10) de mesure de débit servant à distribuer un fluide sous pression, le dispositif comportant :
une soupape (26) reliée au fluide sous pression servant à réguler le débit du fluide sous pression à travers le dispositif ;
un débitmètre (28) disposé au sein de l'écoulement de fluide sous pression pour mesurer un débit volumétrique du fluide sous pression ;
un levier-gâchette (20) configuré pour être déplacé manuellement pour ouvrir mécaniquement la soupape ;
un mécanisme (30) de libération de la gâchette et une électronique (84) de mesure reliée au débitmètre et au mécanisme de libération de la gâchette pour actionner le mécanisme de libération de la gâchette sur la base d'une sortie du débitmètre ;
**caractérisé en ce que** le mécanisme (30) de libération de la gâchette est relié au levier-gâchette et prévu pour être actionné sélectivement afin d'empêcher mécaniquement le levier-gâchette d'ouvrir la soupape lorsque le levier-gâchette est déplacé.

2. Dispositif portatif de mesure de débit selon la revendication 1, le mécanisme de libération de la gâchette comportant :
un solénoïde (32) ;
un pointeau plongeur (70) actionné linéairement par le solénoïde de façon à passer d'une première position à une deuxième position ; et
une tige (51) de déclenchement dotée d'une première extrémité reliée de manière détachable au pointeau plongeur dans la première position, et d'une deuxième extrémité en liaison pivot avec le levier-gâchette.

3. Dispositif portatif de mesure de débit selon la revendication 2, la première extrémité de la tige de déclenchement comportant :
une collerette (53) ;
une pluralité d'alésages (80) s'étendant à travers la collerette ; et
une pluralité de billes (54) de roulement disposées à l'intérieur de la pluralité d'alésages ;
le pointeau plongeur enfonçant la pluralité de billes de roulement dans la pluralité d'alésages pour s'opposer au déplacement linéaire de la tige de déclenchement lorsqu'il se trouve dans la première position.

4. Dispositif portatif de mesure de débit selon la revendication 3, la tige de déclenchement comprenant un ressort (52) de libération pour solliciter la collerette en direction du solénoïde.

5. Dispositif portatif de mesure de débit selon la revendication 4 et comportant en outre un verrou de gâchette relié à la gâchette, le verrou de gâchette comportant :
une plaque (63) d'étai s'étendant de manière pivotante à partir du levier-gâchette en partant d'un premier axe (65) ;
un ressort (64) de blocage positionné autour du premier axe pour solliciter la plaque d'étai en direction du levier-gâchette ; et
une plaque (66) à rochet s'étendant à partir du levier-gâchette en partant d'un deuxième axe (56) de façon à interagir avec la plaque d'étai.

6. Dispositif portatif de mesure de débit selon la revendication 5, la tige de déclenchement étant orientée de façon à produire un déplacement du levier-gâchette suivant un vecteur possédant des composantes parallèle et perpendiculaire à une ligne d'actionnement de la soupape de distribution.

7. Dispositif portatif de mesure de débit selon la revendication 3 le pointeau plongeur comprenant une surface en pente servant à interagir avec la pluralité de billes de roulement.

8. Dispositif portatif de mesure de débit selon la revendication 3, la pluralité d'alésages de la collerette étant rétrécie de façon à empêcher la pluralité de billes de roulement de tomber dans la collerette.

9. Dispositif portatif de mesure de débit selon la revendication 3, le solénoïde comportant un solénoïde d'accrochage.

10. Dispositif portatif de mesure de débit selon la revendication 3, l'électronique de mesure actionnant le pointeau plongeur de la première position à la deuxième position après que le débitmètre a mesuré une quantité prédéfinie de débit volumétrique du fluide sous pression.

11. Dispositif portatif de mesure de débit selon la revendication 3, l'électronique de mesure actionnant le pointeau plongeur de la deuxième position à la première position après avoir reçu une autorisation provenant d'un réseau de communications.

12. Dispositif portatif (10) de mesure de débit servant à distribuer un fluide sous pression selon la revendication 1, le dispositif comportant :
une plate-forme (12) comprenant :
un passage interne (39) de fluide s'étendant à travers la plate-forme pour recevoir le fluide sous pression ;
un alésage borgne (87) de soupape s'étendant jusque dans la plate-forme de façon à croiser le passage de fluide ; et
un alésage (55) de décharge s'étendant à travers la plate-forme au voisinage de l'alésage borgne de soupape ;
la soupape (26) étant disposée dans l'alésage borgne de soupape pour réguler le débit du fluide sous pression à travers le passage de fluide, la soupape étant dotée d'une tige (42) de soupape actionnée linéairement s'étendant à partir de l'alésage borgne de soupape ;
le mécanisme (30) de libération étant relié à l'alésage de décharge, le mécanisme de libération comportant :
un solénoïde (32) relié à la plate-forme au sommet de l'alésage de décharge ;
un pointeau plongeur (70) émergeant du solénoïde pour s'étendre jusque dans l'alésage de décharge, le solénoïde étant configuré pour actionner linéairement le pointeau plongeur entre une première position et une deuxième position ; et
une tige (51) de déclenchement disposée à l'intérieur de l'alésage de décharge et présentant une première extrémité susceptible d'être reliée de manière détachable au pointeau plongeur, et une deuxième extrémité ; et
le levier-gâchette (20) étant en liaison pivot avec la deuxième extrémité de la tige de déclenchement et s'étendant de façon à interagir avec la tige de soupape ;
le pointeau plongeur étant, dans la première position, couplé à la première extrémité de la tige de déclenchement de telle sorte que la deuxième extrémité de la tige de déclenchement constitue un point fixe de pivotement pour permettre à l'actionnement du levier-gâchette d'actionner la soupape ; et
le pointeau plongeur étant, dans la deuxième position, découplé de la tige de déclenchement de telle sorte que la tige de déclenchement puisse coulisser à l'intérieur de l'alésage de décharge par actionnement du levier-gâchette.

13. Dispositif portatif de mesure de débit selon la revendication 12, la tige de déclenchement comportant en outre :
une collerette (53) positionnée à une première extrémité de la tige de déclenchement ;
une pluralité d'alésages coniques (80) s'étendant à travers la collerette ;
une pluralité de billes de roulement (54) disposées à l'intérieur de la pluralité d'alésages coniques, le pointeau plongeur s'étendant jusqu'à la première position pour coincer la pluralité de billes de roulement entre le pointeau plongeur et l'alésage de décharge de façon à s'opposer au déplacement linéaire de la collerette ;
un ressort (52) de libération entourant la tige de déclenchement à l'intérieur de l'alésage de décharge de façon à solliciter la collerette en direction du solénoïde ;
un ressort (44) de soupape disposé à l'intérieur de l'alésage de soupape entre la tige de soupape et la plate-forme de façon à solliciter la soupape vers une position fermée ; et
un verrou de gâchette comportant :
une plaque (63) d'étai s'étendant de manière pivotante à partir du levier-gâchette en partant d'un premier axe (65) ;
un ressort (64) de blocage positionné autour du premier axe de façon à solliciter la plaque d'étai en direction du levier-gâchette ; et
une plaque (66) à rochet s'étendant à partir du levier-gâchette en partant d'un deuxième axe (56) de façon à interagir avec la plaque d'étai.

14. Dispositif portatif de mesure de débit selon la revendication 13, une droite d'actionnement du pointeau plongeur étant disposée de façon à croiser une droite d'actionnement de la tige de soupape selon un angle aigu de telle sorte qu'un mouvement de la tige de déclenchement dans l'alésage de décharge produise une rotation du levier-gâchette autour de la tige de soupape.

15. Dispositif portatif de mesure de débit selon la revendication 1 et comportant en outre une plaque de couverture frangible reliée à la plate-forme pour limiter l'accès à la deuxième extrémité de la tige de déclenchement.
